# EUROPEAN PATENT APPLICATION

(11) **EP 4 074 746 A1**
(43) Date of publication of application: **19.10.2022**
(21) Application number: 20900457.1
(22) Date of filing: 23.10.2020
(51) Int. Cl.: C08G 59/24, C08L 63/02

(54) **RESIN COMPOSITION AND THERMALLY CONDUCTIVE SHEET**

(30) Priority: 10.12.2019 JP 2019222828
(71) Applicant: Nitto Shinko Corporation, Sakai-shi, Fukui 910-0381 (JP)
(72) Inventor: TABUCHI, Akihiro, Sakai-shi, Fukui 910-0381 (JP)
(74) Representative: Stolmár & Partner Patentanwälte PartG mbB
(86) International application number: PCT/JP2020/039879
(87) International publication number: WO 2021/117356

(57) **Abstract**

A resin composition according to the present invention includes an epoxy resin, a curing agent, and an inorganic filler, the inorganic filler being dispersed in the epoxy resin, wherein the epoxy resin includes a tetramethylbisphenol F type epoxy resin, and the curing agent includes a trisphenol type phenol resin.

## Description

### CROSS-REFERENCE TO RELATED APPLICATION

This application claims priority to Japanese Patent Application No. 2019-222828, the disclosure of which is incorporated herein by reference in its entirety.

### FIELD

The present invention relates to a resin composition and a thermal conductive sheet.

### BACKGROUND

Conventionally, a resin composition including an epoxy resin, a curing agent, and an inorganic filler has been used in the electronics field.

Patent Literature 1 below discloses that a cured product obtained by curing a resin composition including an epoxy resin, a curing agent, and an inorganic filler is used as a heat dissipation sheet. Such a heat dissipation sheet includes a relatively large amount of an inorganic filler such as a boron nitride filler and thus has heat dissipation properties.

### CITATION LIST

### Patent Literature

Patent Literature 1: JP 2010-94887 A

### SUMMARY

### Technical Problem

However, although the resin composition disclosed in Patent Literature 1 includes a relatively large amount of an inorganic filler as described above, there is a problem that the heat dissipation properties, when the resin composition has been turned into a cured product, is not necessarily sufficient.

Therefore, an object of the present invention is to provide a resin composition having sufficient heat dissipation properties when it is turned into a cured product, and a thermal conductive sheet including a resin layer formed by the resin composition.

### Solution to Problem

The resin composition according to the present invention includes an epoxy resin, a curing agent, and an inorganic filler, the inorganic filler being dispersed in the epoxy resin, wherein the epoxy resin includes a tetramethylbisphenol F type epoxy resin represented by formula (1) below, and the curing agent includes a trisphenol type phenol resin represented by formula (2) below. 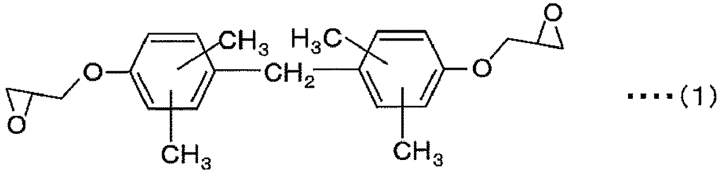 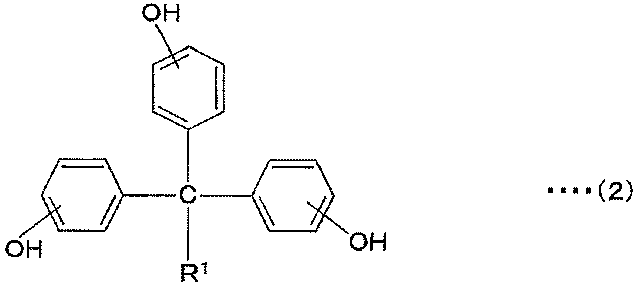 wherein R¹ is H or CₙH₂ₙ₊₁ (n denotes an integer of 1 or more).

The thermal conductive sheet according to the present invention includes a resin layer formed by a resin composition that includes an epoxy resin, a curing agent, and an inorganic filler, the inorganic filler being dispersed in the epoxy resin, wherein the epoxy resin includes a tetramethylbisphenol F type epoxy resin represented by formula (1) below, and the curing agent includes a trisphenol type phenol resin represented by formula (2) below. 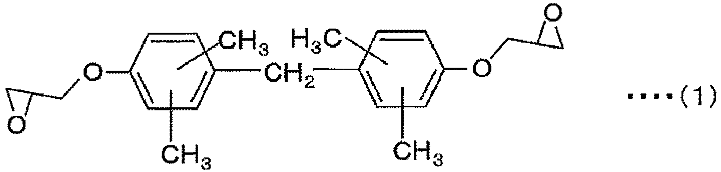 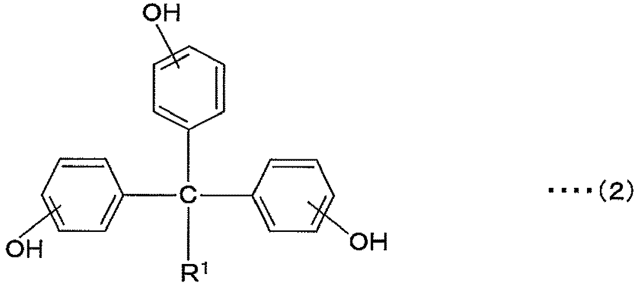 wherein R¹ is H or CₙH₂ₙ₊₁ (n denotes an integer of 1 or more).

### DESCRIPTION OF EMBODIMENTS

Hereinafter, an embodiment of the present invention will be described.

### (Resin composition)

A resin composition according to this embodiment includes a component that eventually constitutes a cured product. That is, the resin composition according to this embodiment includes a polymerizable component that is turned into a cured resin by polymerization. Also, the resin composition according to this embodiment includes an inorganic filler to cause the cured product after it is cured to have good thermal conductive properties. The resin composition according to this embodiment may include additives commonly used as a plastic containing chemical in a range so as not to impair the effect of the present invention.

The content ratio of the polymerizable component in the resin composition according to this embodiment is preferably 10 parts by mass or more and 70 parts by mass or less, more preferably 30 parts by mass or more and 40 parts by mass or less, based on 100 parts by mass of the cured product after the resin composition is cured.

The cured product obtained by curing the resin composition according to this embodiment preferably includes 10 parts by volume or more and 60 parts by volume or less of the inorganic filler, more preferably includes 30 parts by volume or more and 60 parts by volume or less of the inorganic filler, still more preferably includes 50 parts by volume or more and 60 parts by volume or less of the inorganic filler, when a solid content of the cured product is 100 parts by volume. In view of the fact that the content ratio of the inorganic filler in the cured product tends to fall within the aforementioned range, the resin composition according to this embodiment preferably includes 30 parts by mass or more and 90 parts by mass or less of the inorganic filler, more preferably includes 60 parts by mass or more and 70 parts by mass or less of the inorganic filler, based on 100 parts by mass of the polymerizable component.

Further, the resin composition according to this embodiment preferably includes 0.005 parts by mass or more and 0.05 parts by mass or less of the additives, more preferably includes 0.01 parts by mass or more and 0.03 parts by mass or less of the additives, based on 100 parts by mass of the inorganic filler.

The resin composition according to this embodiment includes, as the polymerizable component, an epoxy resin and a curing agent. In this embodiment, the epoxy resin is cured together with the curing agent to be turned into a cured resin.

The epoxy resin includes a tetramethylbisphenol F type epoxy resin represented by formula (1) below. The tetramethylbisphenol F type epoxy resin represented by formula (1) below is a solid epoxy resin which is in a solid form at normal temperature (for example, 23 °C). Examples of the tetramethylbisphenol F type epoxy resin represented by formula (1) below include a 3,3',5,5'-tetramethylbisphenol F type epoxy resin represented by formula (1') below.

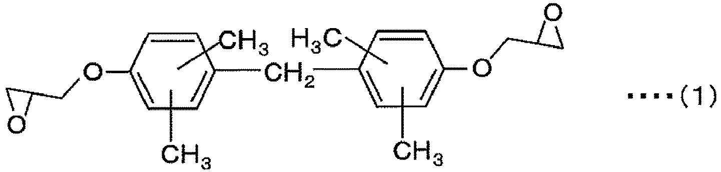

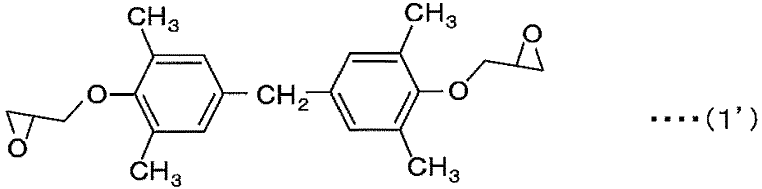

The curing agent includes a trisphenol type phenol resin represented by formula (2) below. Examples of the trisphenol type phenol resin represented by formula (2) below include a trisphenol type phenol resin represented by formula (2') below. In the trisphenol type phenol resin represented by formula (2) below, R¹ is preferably H (hydrogen) or a hydrocarbon group (that is, a methyl group or an ethyl group) represented by CₙH₂ₙ₊₁ and n is 1 or 2. That is, when R¹ is CₙH₂ₙ₊₁, it is preferable that n be an integer of 1 or more and 2 or less. 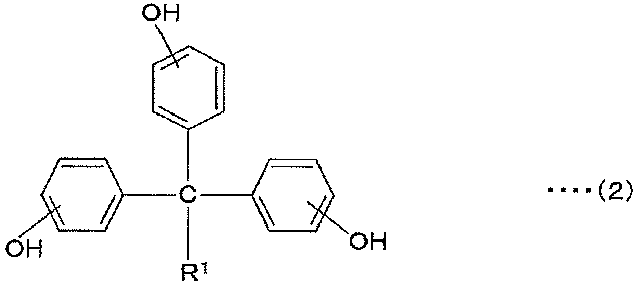 wherein R¹ is H or CₙH₂ₙ₊₁ (n denotes an integer of 1 or more). 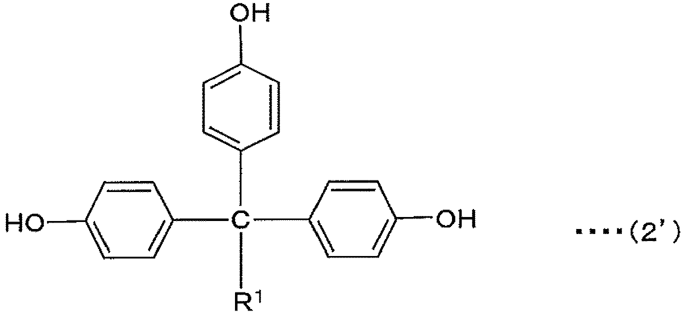 wherein R¹ is H or CₙH₂ₙ₊₁ (n denotes an integer of 1 or more).

The ratio of the total of the epoxy resin and the curing agent in the polymerizable component is preferably 80 mass% or more and 100 mass% or less, more preferably 90 mass% or more and 100 mass% or less.

The equivalent ratio of the equivalents of the epoxy resin to the equivalents of the curing agent of the epoxy resin is preferably 1/2 or more and 2/1 or less, more preferably 2/3 or more and 3/2 or less.

The inorganic filler is dispersed in the epoxy resin. Examples of the inorganic filler include a boron nitride filler, an aluminum nitride filler, a silicon nitride filler, a gallium nitride filler, an alumina filler, a silicon carbide filler, a silicon dioxide filler, a magnesium oxide filler, and a diamond filler. Among them, the boron nitride filler (i.e., boron nitride particles) is preferable.

The inorganic filler preferably includes aggregated particles in which a plurality of primary particles are aggregated. The inorganic filler can be configured to have a large particle size by the inclusion of the aggregated particles, so that the distance between the other inorganic particles in the epoxy resin can be shortened.
This configuration can improve the heat dissipation properties when the resin composition according to this embodiment has been turned into a cured product.

The inorganic filler can include the whisker-like filler. The term "whisker" herein means a needle-like single crystal, and aluminum nitride whisker, alumina whisker, calcium carbonate whisker, calcium metasilicate whisker, or the like can be used as the whisker-like filler. The aforementioned whisker-like filler is a fibrous high thermal conductivity inorganic filler having a relatively high thermal conductivity at 20 °C. The aforementioned whisker-like filler generally has a thickness of 2 to 3 µm and a length of several tens µm to several thousands µm. Thus, in the case where the inorganic filler includes the whisker-like filler, the aluminum nitride whisker having a thermal conductivity (170 W/(mK) or more) which is particularly high at 20 °C is preferably used as the whisker-like filler.

The aluminum nitride whisker has a relatively high thermal conductivity as aforementioned (i.e., 170 W/(mK) or more) and has a length as aforementioned (i.e., a length of several tens µm to several thousands µm). Thus, in the case where the aluminum nitride whisker together with the aforementioned inorganic particles is included in the resin composition according to this embodiment, the aluminum nitride whisker is assumed to fulfill a role to connect the aforementioned inorganic particles with each other when the resin composition is turned into a cured product. That is, it is assumed that heat dissipation paths for connecting the aforementioned inorganic particles with each other are formed in the cured product of the resin composition and therefore the heat dissipation is enhanced via the heat dissipation paths. Thereby, it is assumed that the cured product of the resin composition according to this embodiment has an improved heat dissipation properties.

In the case where the inorganic filler includes the whisker-like filler, the aforementioned epoxy resin preferably further includes a liquid epoxy resin which is in a liquid form at normal temperature (23 °C ± 2 °C). The aforementioned epoxy resin enables a whisker-like filler to be sufficiently dispersed in the epoxy resin by the additional inclusion of the liquid epoxy resin.

As the liquid epoxy resin, a commercially available bisphenol A type epoxy resin in a liquid form can be used. Examples of the commercially available bisphenol A type epoxy resin in a liquid form include JER (registered trademark) 825, JER (registered trademark) 827, JER (registered trademark) 828, JER (registered trademark) 828EL, JER (registered trademark) 828 US, JER (registered trademark) 828XA, and JER (registered trademark) 824. Among them, JER (registered trademark) 828 is preferable for use.

In the resin composition according to this embodiment, it is preferable that 20 parts by volume or more and 30 parts by volume or less of the liquid epoxy resin be included, it is more preferable that 22 parts by volume or more and 28 parts by volume or more of the liquid epoxy resin be included, it is still more preferable that 24 parts by volume or more and 26 parts by volume or less of the liquid epoxy resin be included, with respect to 1 part by volume of the whisker-like filler.

The whisker-like filler is preferably held in a dispersed state in order to sufficiently form the heat dissipation paths among the aforementioned inorganic particles by the whisker-like filler as described above. On the other hand, the whisker-like filler is generally present in a cotton-like aggregate. Therefore, the whisker-like filler is preferably fractured or loosened, and thereby dispersed in the liquid epoxy resin.

In the case where the inorganic filler includes the whisker-like filler, the content of the whisker-like fiber in the cured product obtained by curing the resin composition according to this embodiment is preferably 0.07 parts by volume or more and 0.50 parts by volume or less, more preferably 0.08 parts by volume or more and 0.40 parts by volume or less, still more preferably 0.08 parts by volume or more and 0.34 parts by volume or less based on the total volume part of the inorganic filler.

Meanwhile, although it is not clear why the resin composition according to this embodiment exhibits sufficient heat dissipation when it has been turned into a cured product, the present inventor presumes that the use of a tetramethylbisphenol F type epoxy resin represented by formula (1) above as the epoxy resin and a trisphenol type phenol resin represented by formula (2) above as the curing agent enables to effectively form, in the resin composition that has been turned into the cured product, the dissipation path in the thickness direction of the cured body (i.e., the direction vertical to the surface in contact with the heating element).

Examples of the additives include a curing accelerator for accelerating the curing reaction of the epoxy resin with the curing agent, and also include a dispersant, a tackifier, an aging retardant, an antioxidant, a processing aid, a stabilizer, a defoamer, a flame retarder, a thickener, and a pigment.

Examples of the curing accelerator include tetraphenylphosphonium tetraphenylborate, imidazoles, triphenylphosphate (TPP), and an amine-based curing accelerator. Examples of the amine-based curing accelerator include boron trifluoride monoethylamine.

The content of the curing accelerator in the resin composition according to this embodiment is preferably 0.5 parts by mass or more and 1.5 parts by mass or less, more preferably 0.5 parts by mass or more and 1.0 parts by mass or less based on 100 parts by mass of the total of the epoxy resin and the curing agent.

The resin composition according to this embodiment may be incompletely cured while its curing reaction has progressed to some extent. In other words, the resin composition may be in a state where its curing reaction has progressed in a part thereof. For example, the resin composition in a state of having fluidity may be coated in a sheet shape, and thereafter allowed to be partly cured. Even in the case where the curing reaction has partly progressed, the resin composition according to this embodiment includes the aforementioned epoxy resin, the aforementioned curing agent, and the aforementioned inorganic filler.

### (Method for producing a resin composition)

A method for producing the resin composition according to this embodiment includes a kneading step of kneading raw materials including an epoxy resin of formula (1) above, a curing agent of formula (2) above, and an inorganic filler to prepare a resin composition in which the inorganic filler is dispersed in the epoxy resin of formula (1) above. The inorganic filler preferably includes boron nitride filler (i.e., boron nitride particles). Also, the inorganic filler preferably includes aggregated particles in which a plurality of primary particles are aggregated.

The inorganic filler can include the whisker-like filler. In the case where the inorganic filler includes the whisker-like filler, the aluminum nitride whisker is preferably used as the whisker-like filler. In the case where the inorganic filler includes the whisker-like filler, the epoxy resin preferably includes a liquid epoxy resin which is in a liquid form at normal temperature in addition to the epoxy resin of formula (1) above. In the case where the inorganic filler includes the whisker-like filler, in the method for producing the resin composition according to this embodiment, a pre-kneading step of dispersing the whisker-like filler in the liquid epoxy resin is preferably performed before the kneading step.

Although the whisker-like filler is generally present in a cotton-like aggregate as described above, the aggregated whisker-like filler can be sufficiently fractured or loosened by performing the pre-kneading step before the kneading step as described above. The kneading step is performed with the thus sufficiently fractured or loosened whisker-like filler in the method for producing the resin composition according to this embodiment, and thus the whisker-like filler can be sufficiently dispersed in the epoxy resin. Thereby, the whisker-like filler can provide sufficient connections between the inorganic particles dispersed in the epoxy resin, and thus the heat dissipation properties when the resin composition obtained by the aforementioned method is turned into a cured product can be further improved.

When the pre-kneading step is performed before the kneading step in the case where the inorganic filler includes the whisker-like filler and the epoxy resin includes a liquid epoxy resin, the kneading step can be performed with the whisker-like filler sufficiently fractured or loosened. Therefore, the inorganic particles can be sufficiently dispersed in the resin composition without need for excessive kneading in the kneading step. Thereby, even in the case where the inorganic filler includes the aggregated particles, the inorganic filler can be sufficiently dispersed in the epoxy resin while maintaining the aggregation state of the aggregated particles to some extent. As described above, the distance between the inorganic particles can be shortened by the inclusion of the aggregated particles, and therefore the dissipation paths between the inorganic particles by the aluminum nitride whisker can be easily formed. As a result, the heat dissipation properties when the resin composition is turned into a cured product can be further improved.

### (Thermal conductive sheet)

The thermal conductive sheet according to this embodiment includes a resin layer constituted by the aforementioned resin composition. Therefore, the thermal conductive sheet according to this embodiment has improved heat dissipation properties.

As the material of an adherend for the thermal conductive sheet, metal is preferable. Specifically, metal including copper or aluminum is preferable.

The thermal conductive sheet according to this embodiment can be used for a metal base circuit substrate. The metal base circuit substrate is formed by, for example, adhering a circuit layer to a thermal conductive sheet. The metal base circuit substrate having this configuration includes the thermal conductive sheet according to this embodiment, and thus the metal base circuit substrate also has improved heat dissipation properties.

Further, the thermal conductive sheet according to this embodiment is used for, for example, a power module. The power module is formed by, for example, mounting a heat generating element such as a semiconductor chip or a power IC on a circuit layer of the metal base circuit substrate, temporarily sealing these elements with silicone gel, followed by performing resin molding on the silicone gel. The power module with this configuration includes the thermal conductive sheet according to this embodiment, and thus the power module also has improved heat dissipation properties.

The resin composition and the thermal conductive sheet according to this embodiment are configured above and thus have the following advantages.

That is, the resin composition according to this embodiment includes an epoxy resin, a curing agent, and an inorganic filler, the inorganic filler being dispersed in the epoxy resin, wherein the epoxy resin includes a tetramethylbisphenol F type epoxy resin represented by formula (1) below, and the curing agent includes a trisphenol type phenol resin represented by formula (2) below. 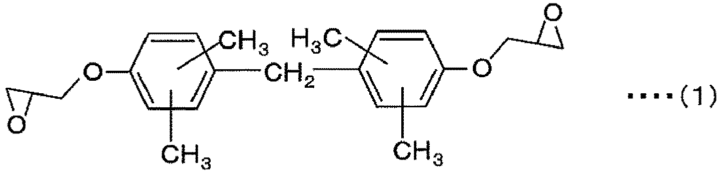 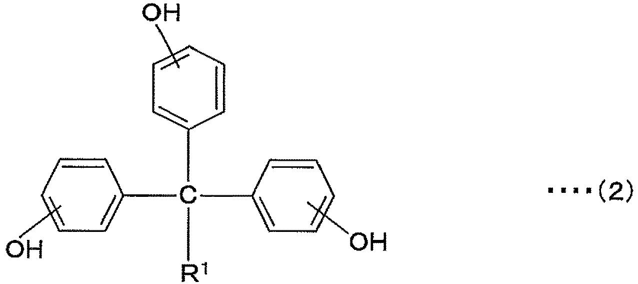 wherein R¹ is H or CₙH₂ₙ₊₁ (n denotes an integer of 1 or more).

According to this configuration, the resin composition can have sufficient heat dissipation properties when it has been turned into a cured product.

In the resin composition according to this embodiment, the epoxy resin can include a tetramethylbisphenol F type epoxy resin represented by formula (1' ) below, and the curing agent can include a trisphenol type phenol resin represented by formula (2' ) below. 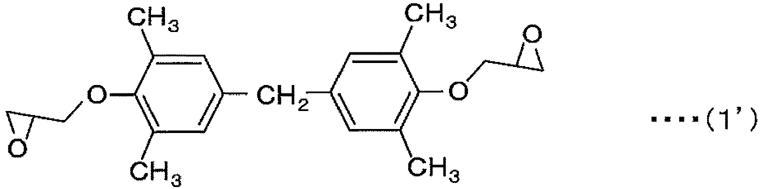 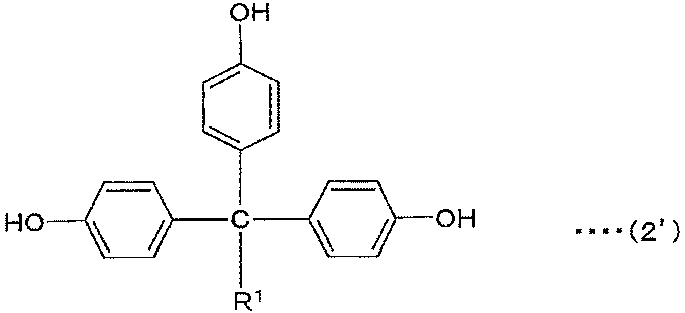 wherein R¹ is H or CₙH₂ₙ₊₁ (n denotes an integer of 1 or more).

According to this configuration, the resin composition can have more sufficient heat dissipation properties when it has been turned into a cured product.

In the resin composition according to this embodiment, the curing agent can include a trisphenol type phenol resin represented by formula (2' ) below, wherein R¹ is a methyl group.

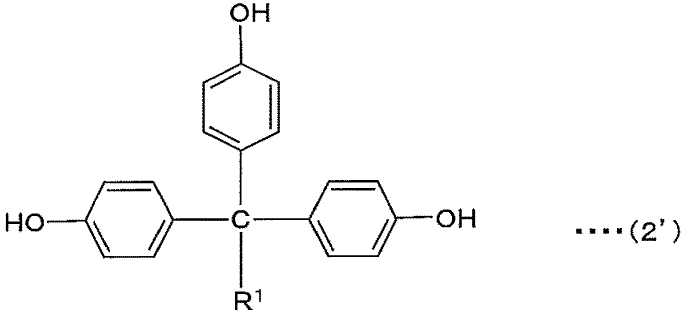

According to this configuration, the resin composition can have more sufficient heat dissipation properties when it has been turned into a cured product.

In the resin composition according to this embodiment, the curing agent can include a trisphenol type phenol resin represented by formula (2' ) below, wherein R¹ is hydrogen.

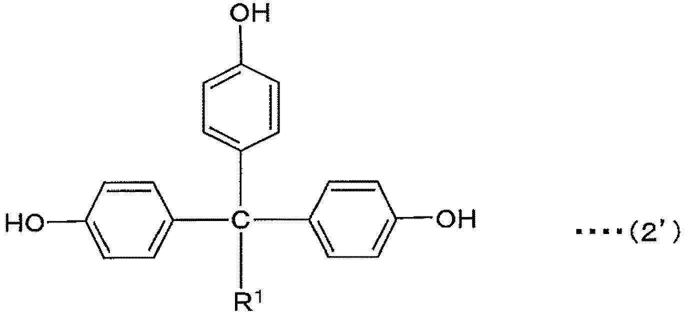

According to this configuration, the resin composition can have more sufficient heat dissipation properties when it has been turned into a cured product.

In the resin composition according to this embodiment, the inorganic filler can include boron nitride particles.

According to this configuration, the resin composition can have more sufficient heat dissipation properties when it has been turned into a cured product.

The thermal conductive sheet according to this embodiment includes a resin layer formed by a resin composition that includes an epoxy resin, a curing agent, and an inorganic filler, the inorganic filler being dispersed in the epoxy resin, wherein the epoxy resin includes a tetramethylbisphenol F type epoxy resin represented by formula (1) below, and the curing agent includes a trisphenol type phenol resin represented by formula (2) below. 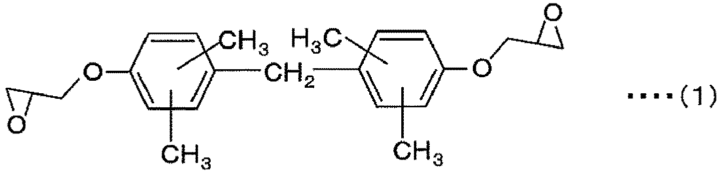 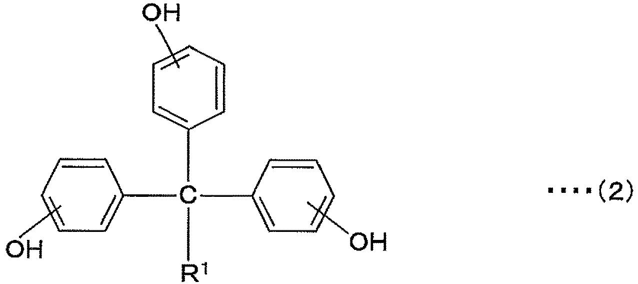 wherein R¹ is H or CₙH₂ₙ₊₁ (n denotes an integer of 1 or more).

According to this configuration, the thermal conductive sheet has improved heat dissipation properties.

In the thermal conductive sheet according to this embodiment, the epoxy resin can include a tetramethylbisphenol F type epoxy resin represented by formula (1' ) below, and the curing agent can include a trisphenol type phenol resin represented by formula (2' ) below. 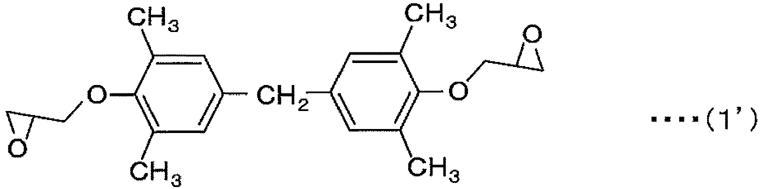 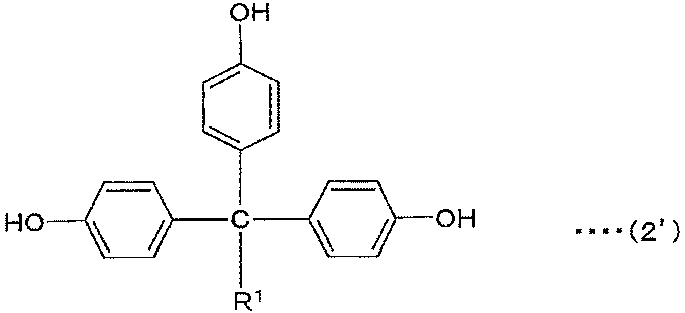 wherein R¹ is H or CₙH₂ₙ₊₁ (n denotes an integer of 1 or more).

According to this configuration, the thermal conductive sheet has improved heat dissipation properties.

In the thermal conductive sheet according to this embodiment, the curing agent can include a trisphenol type phenol resin represented by formula (2' ) below, wherein R¹ is a methyl group.

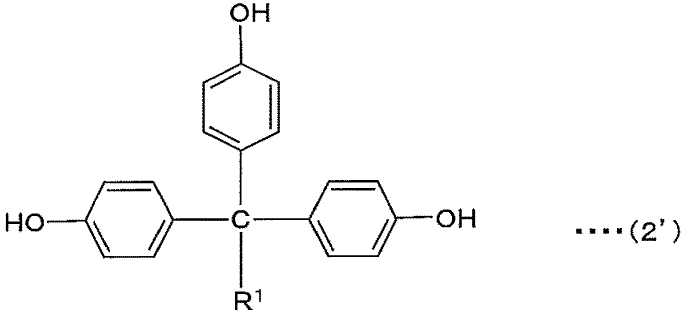

According to this configuration, the thermal conductive sheet has improved heat dissipation properties.

In the thermal conductive sheet according to this embodiment, the curing agent can include a trisphenol type phenol resin represented by formula (2' ) below, wherein R¹ is hydrogen.

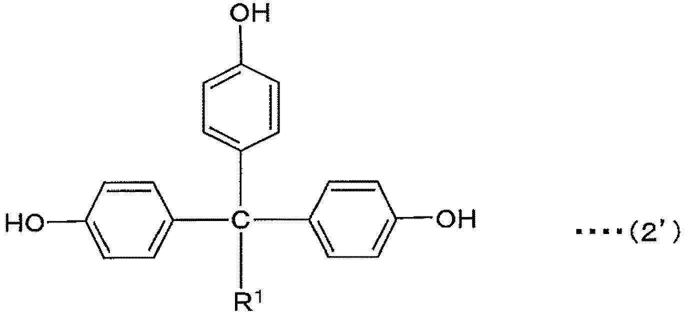

According to this configuration, the thermal conductive sheet has improved heat dissipation properties.

In the thermal conductive sheet according to this embodiment, the inorganic filler can include boron nitride particles.

According to this configuration, the thermal conductive sheet has further improved heat dissipation properties.

The resin composition and the thermal conductive sheet according to the present invention are not limited to the configuration of the aforementioned embodiments. Further, the resin composition and the thermal conductive sheet according to the present invention are not limited to those having the aforementioned operational effects. Various modifications can be made to the resin composition and the thermal conductive sheet according to the present invention without departing from the gist of the present invention.

### EXAMPLES

Next, the present invention will be described in more detail by way of Examples and Comparative Examples.

### (Example 1)

A resin composition was obtained by kneading a solid epoxy resin, a curing agent, a curing accelerator, and the inorganic particles listed below.
- Solid epoxy resin: 3,3',5,5'-tetramethylbisphenol F type epoxy resin of formula (1') below (YSLV-80XY, manufactured by NIPPON STEEL Chemical & Material Co., Ltd.)
- Curing agent: Trisphenol type phenol resin of formula (2') below (Tris P-PHBA-S, manufactured by Honshu Chemical Industry Co., Ltd.), wherein R¹ is H (hydrogen).
- Curing accelerator: Tetraphenylphosphonium tetraphenylborate (TPP-K (registered trademark), manufactured by Hokko Chemical Industry Co., Ltd.)
- Inorganic particles: Boron nitride filler (BN filler)

The epoxy resins and the curing agents were included in the resin composition at an equivalent ratio of 1:1. The curing accelerator was included in the resin composition in an amount of 0.01 parts by mass based on 100 parts by mass of the total of the epoxy resin and the curing agent. Further, the inorganic filler was included in the resin composition so that the content ratio of the inorganic filler was 59.0 parts by volume when a solid content of the cured product of the resin composition after the resin composition was cured was 100 parts by volume. 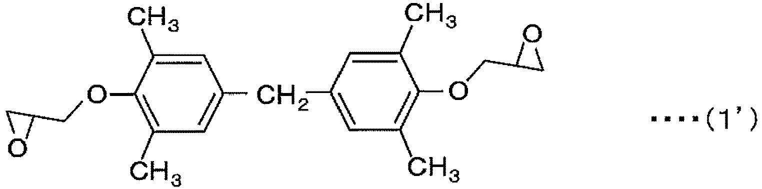 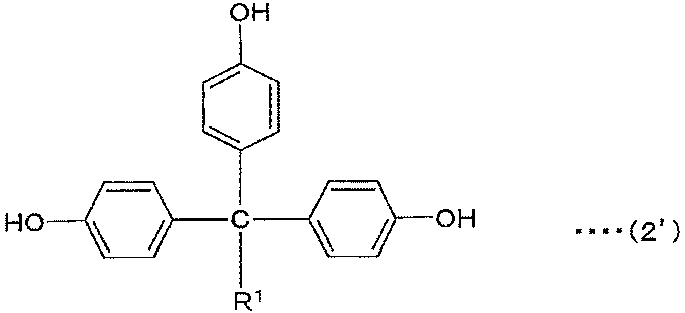 wherein R¹ is H or CₙH₂ₙ₊₁ (n denotes an integer of 1 or more).

### (Example 2)

A resin composition according to Example 2 was obtained in the same manner as Example 1 except that a trisphenol type phenol resin (BIP-PHAP manufactured by ASAHI YUKIZAI CORPORATION) wherein R¹ is CH₃ (methyl group) having n = 1 was used.

### (Comparative Example 1)

A resin composition was obtained in the same manner as Example 1 except that a bisphenol A type epoxy resin (JER (registered trademark) 1009 (manufactured by Mitsubishi Chemical Holdings Corporation)) was used instead of the solid epoxy resin of formula (1') above, and a novolac type phenol resin was used instead of the curing agent for the epoxy resin of formula (2) above.

### <Thermal conductivity>

In the measurement of thermal conductivity, an insulating heat dissipation sheet was prepared in the following manner. First, the resin composition (thickness: approx. 200 µm) according to each of the aforementioned examples was coated on a copper foil (area: 2,500 cm²) as a base material. A coater method, namely, roll-to-roll processing, was adopted as a coating method with dry conditions at 120 °C for 5 minutes. In this way, resin sheets were prepared for the resin compositions according to the aforementioned examples. Next, an insulating heat dissipation sheet including a metal foil (insulation layer thickness: 0.22 mm with a fluctuation of plus or minus 0.04 mm) was prepared for each of the resin sheets according to the aforementioned examples by superposing two pieces of the resin sheets of the same type so as to allow the surfaces that are not in contact with the base material to face each other, and hot pressing at a temperature at 100 °C and a pressure of 8 MPa for period of 20 minutes.

A copper foil which is a metal foil was removed from each surface of the insulating heat dissipation sheet by etching, and a resin cured product having a rectangular shape with each side of 10 mm with a fluctuation of plus or minus 0.5 mm was cut out from the insulating head dissipation sheet. Then, an antireflection agent (manufactured by Fine Chemical Japan Co., Ltd., Product No.: FC-153) was coated on both surfaces of the resin cured product thus cut out to prepare a thermal diffusivity measurement sample. The value of the thermal conductivity was calculated by multiplying the value of the thermal diffusivity measured for the thermal diffusivity measurement sample using a xenon flash analyzer (manufactured by NETZSCH, LFA-447 type) by the value of the specific heat measured by a heat flux DSC in accordance with JIS 7123:1987 and the value of the density measured by a water substitution method in accordance with JIS K 7122:1999. The value of the thermal diffusivity was obtained by arithmetically averaging the values of the thermal diffusivity measured for three measurement samples. The thermal diffusivity was measured at five points of each measurement sample, and the value obtained by arithmetically averaging the values at three points excluding the maximum value and the minimum value was taken as the measurement value of each of the measurement samples.

The measured values of the thermal conductivity by the aforementioned method are shown in Table 1 below.

**Table 1**

| | Solid epoxy resin | Curing aeent | Inorganic filler | Thermal conductivity [W/(m·K)] |
|---|---|---|---|---|
| Ex. 1 | Formula (1') | Formula (2') wherein R¹ is H (hydrogen) | BN filler | 13 |
| Ex. 2 | Formula (1') | Formula (2') wherein R¹ is CH₃ (methyl group) having n = 1 | BN filler | 13 |
| C. Ex. 1 | Bisphenol A type | Novolac type phenol resin | BN filler | 11 |

As is evident from Table 1, the cured products of the resin compositions according to Examples 1 to 2 are significantly improved in thermal conductivity, that is, greatly improved in heat dissipation properties as compared with the resin composition according to Comparative Example 1. These results revealed that the cured product obtained by the resin composition using a specific solid epoxy resin (i.e., the solid epoxy resin of formula (1') above) and a specific curing agent (i.e., the curing agent of formula (2') above) can achieve improvement in thermal conductivity.

## Claims

1. A resin composition comprising an epoxy resin, a curing agent, and an inorganic filler, the inorganic filler being dispersed in the epoxy resin, wherein
the epoxy resin comprises a tetramethylbisphenol F type epoxy resin represented by formula (1) below, and
the curing agent comprises a trisphenol type phenol resin represented by formula (2) below, 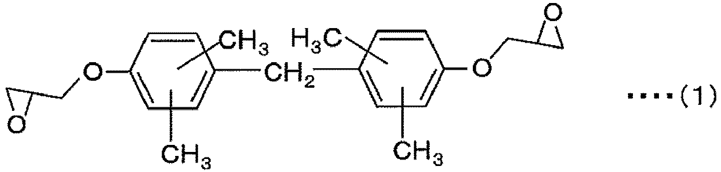 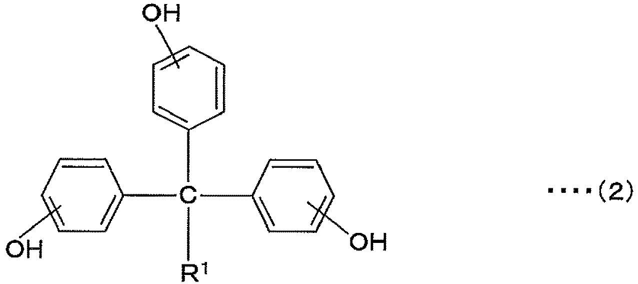
wherein R¹ is H or CₙH₂ₙ₊₁ (n denotes an integer of 1 or more).

2. The resin composition according to claim 1, wherein
the epoxy resin comprises a tetramethylbisphenol F type epoxy resin represented by formula (1') below, and
the curing agent comprises a trisphenol type phenol resin represented by formula (2') below, 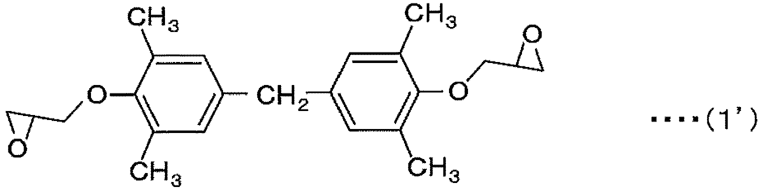 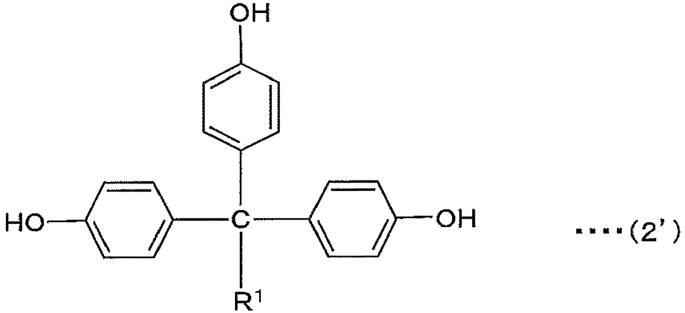
wherein R¹ is H or CₙH₂ₙ₊₁ (n denotes an integer of 1 or more).

3. The resin composition according to claim 2, wherein
the curing agent comprises a trisphenol type phenol resin represented by formula (2') below, wherein R¹ is a methyl group.

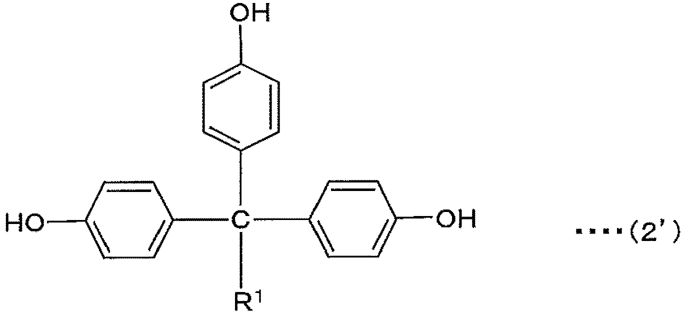

4. The resin composition according to claim 2, wherein
the curing agent comprises a trisphenol type phenol resin represented by formula (2') below, wherein R¹ is hydrogen.

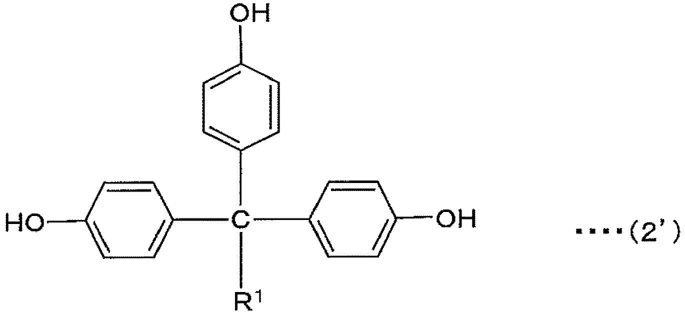

5. The resin composition according to any one of claims 1 to 4, wherein
the inorganic filler comprises boron nitride particles.

6. A thermal conductive sheet comprising a resin layer formed by a resin composition that comprises an epoxy resin, a curing agent, and an inorganic filler, the inorganic filler being dispersed in the epoxy resin, wherein
the epoxy resin comprises a tetramethylbisphenol F type epoxy resin represented by formula (1) below, and
the curing agent includes a trisphenol type phenol resin represented by formula (2) below, 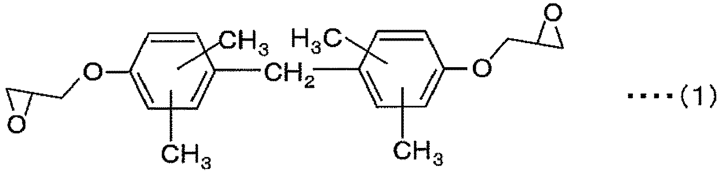 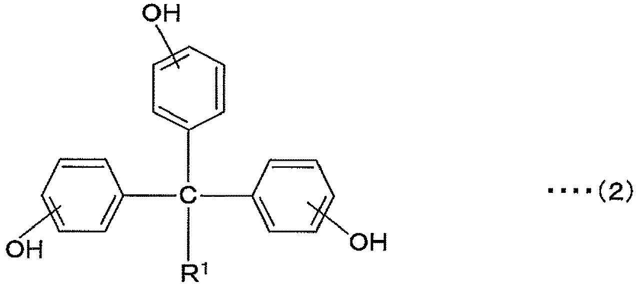 wherein R¹ is H or CₙH₂ₙ₊₁ (n denotes an integer of 1 or more).

7. The thermal conductive sheet according to claim 6, wherein
the epoxy resin comprises a tetramethylbisphenol F type epoxy resin represented by formula (1' ) below, and
the curing agent comprises a trisphenol type phenol resin represented by formula (2' ) below, 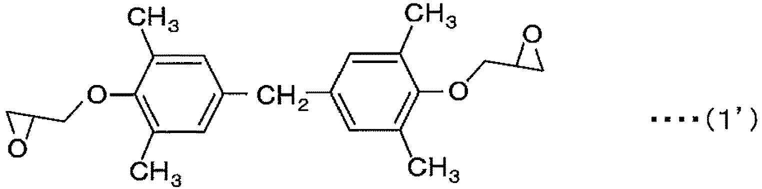 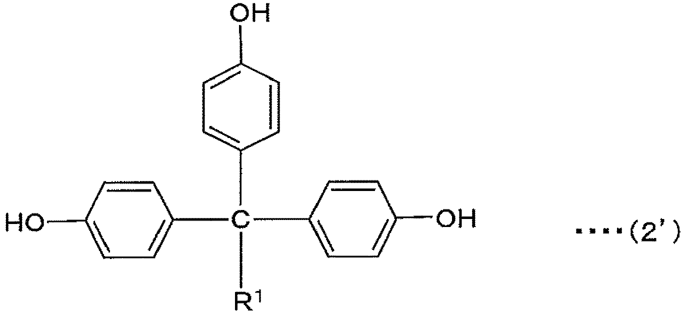
wherein R¹ is H or CₙH₂ₙ₊₁ (n denotes an integer of 1 or more).

8. The thermal conductive sheet according to claim 7, wherein
the curing agent comprises a trisphenol type phenol resin represented by formula (2') below, wherein R¹ is a methyl group.

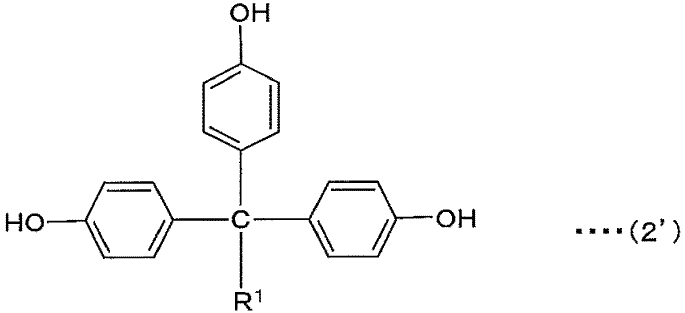

9. The thermal conductive sheet according to claim 8, wherein
the curing agent comprises a trisphenol type phenol resin represented by formula (2') below, wherein R¹ is hydrogen.

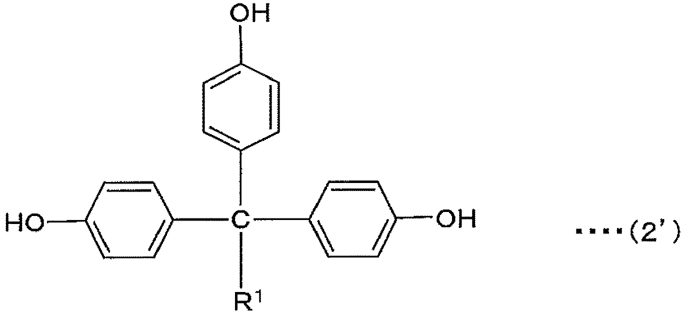

10. The thermal conductive sheet according to any one of claims 5 to 9, wherein the inorganic filler comprises boron nitride particles.
